Europäisches Patentamt

European Patent Office

Office européen des brevets

(11) Publication number: **0 406 490 A1**

## EUROPEAN PATENT APPLICATION

(21) Application number: **89306838.7**

(22) Date of filing: **05.07.89**

(51) Int. Cl.5: **A01D 75/30**, A01D 75/28, A01D 34/86

(43) Date of publication of application:
09.01.91 Bulletin 91/02

(84) Designated Contracting States:
**DE FR GB**

(71) Applicant: **DEWEZE MANUFACTURING INC.**
**Route 2 Box 78 Harper**
**Kansas, KS 6058(US)**

(72) Inventor: **Hostetler, Dewey L.**
**Route 2 Box 77**
**Harper Kansas 67058(US)**
Inventor: **Lansdowne, David L.**
**1422 Central Harper**
**Kansas 67058(US)**
Inventor: **Hershberger, Howard O.**
**Route 1 Box 66**
**Harper Kansas 67058(US)**

(74) Representative: **Allen, William Guy Fairfax et al**
**J.A. KEMP & CO. 14 South Square Gray's InnInn**
**London WC1R 5EU(GB)**

(54) **Slope mower.**

(57) A mower for mowing slopes, said mower having a main frame (303), aligned single front and rear wheels (304, 305), a prime mower on the main frame and a side support frame (310, 311) on each side of the main frame, each side support frame extending laterally from and being swingable about a separate longitudinal axis. An outrigger wheel (376, 390) is provided on each side support frame. First and second mowers (308, 309) each include a mower housing (316) extending outwardly on each lateral side of the main frame, said mowers being at least partly movable relative to their associated side frame. Pivot means (384) pivot the side frames about their longitudinal axis in automatic response to a change in terrain, so that the front and rear wheels remain in vertical orientation.

EP 0 406 490 A1

## SLOPE MOWER WITH SIDE FRAMES

### Background of the Invention

This invention relates to mowing vehicles in general and particularly to such vehicles that are responsive to changes in terrain such that the vehicle body is maintained in a generally vertical orientation.

Mowing vehicles, such as riding lawn mowers and tractors with mowing attachments, have long been used in mowing hillsides, particularly by highway maintenance personnel. Most of these vehicles do not provide means for adapting to changing terrain, such that when a vehicle is on a slope the frame tilts accordingly, which can result in the vehicle tipping over. At the least, there is a dangerous situation, with operators sometimes leaning their bodies toward the upside of the hill in an effort to lower the center of gravity. Prior vehicles have often been adaptations of existing machines involving mechanical actuation of a mower blade assembly to conform to the slope, without significant modification of the vehicle frame such that the frame tilts with the slope. Such embodiments are limited in the degree of slope upon which they can be effectively and safely operated. Other devices have involved three- or four-wheeled vehicle frames with complex actuation of fixed deck blade housings.

Additionally, these complex machines have been expensive, which prohibits many small operators and municipalities from using them. The saftey advantages of providing an arrangement whereby the operator always sits vertically even though he is mowing along a sloped embankment are obvious. Heretofore, there has not been a slope mower having a relatively simple leveling system for maintaining the vehicle frame in a vertical orientation, nor has there been such a vehicle having a blade housing arrangement for adapting to variances in the slope of the ground covered by the path of the mower.

### Objects of the Invention

The principal objects of the present invention are: to provide a mower vehicle for mowing sloping hillsides; to provide such a vehicle which has means to maintain the vehicle frame and accordingly, the operator, in a generally vertical or upright orientation; to provide such a vehicle which includes a single front and a single rear wheel; to provide such a vehicle having means for driving each of the front and rear wheels; to provide such a vehicle which has dual blade housings centered on an axis extending longitudinally of the frame and pivotally connected thereto; to provide such a vehicle which has hydraulic assemblies for pivoting the blade housings independently of one another; to provide such a mower vehicle which has a leveling arrangement for actuating the hydraulic cylinder arrangement to maintain each blade housing in operative contact with the ground while maintaining the vehicle frame in a generally vertical orientation; to provide such a vehicle having a hydraulic cylinder arrangement connected to an accumulator device for permitting the blade housings to operate independently of one another; to provide such a vehicle including wheeled side frames pivotally attached to opposite sides of the vehicle and hydraulically biased to maintain such vehicle in an upright orientation and having mower housings floating relative to each side frame; to provide such a vehicle which is relatively simple to use, economical to manufacture, and particularly well adapted to the proposed usage thereof.

Other objects and advantages of this invention will become apparent from the following description taken in conjunction with the accompanying drawings wherein are set forth, by way of illustration and example, certain embodiments of this invention.

### Summary of the Invention

A slope mower includes a vehicle frame and, preferably, single front and rear driven wheels. The vehicle is adapted to maintain the frame in a generally upright orientation. First and second blade housings are pivotally connected to a central section of the frame and are swingable about respective axes extending longitudinally of the frame, and preferably, the blade housings rotate about a single, central longitudinal axis. The first and second blade housings extend laterally to opposite sides of the frame. Each blade housing carries a driven cutting blade, which blades overlap slightly and rotate in synchronized reverse rotations relative to one another. It is envisioned that the blade housings can be modified to carry a reel type cutting assembly. The blade housings are open to one another and have a shared discharge passage at a center rear section thereof. The reverse rotation of just two blades with a central discharge has been found to be an efficient cutting arrangement. A V-shaped divider is provided to direct cut grass away from the path of the rear wheel. This configuration also prevents substantial wind rows.

Hydraulic cylinder and piston rod arrangements are provided to power rotate the first and second blade housings about the central longitudinal axis in response to changes in slope of the surrounding terrain. A leveling system is provided for sensing changes in attitude of the vehicle frame, and for actuating the hydraulic cylinder arrangments to maintain the vehicle frame in a generally upright position, which simultaneously results in the first and second blade housings maintain contact with the ground.

In an alternative embodiment, a pair of side frames are hinged to the vehicle frame with each of the side frames being positioned by an hydraulic ram so as to maintain the vehicle in an upright orientation. Each side member includes an outrigger wheel for travel along the ground surface. A pair of mower housings are floatably mounted beneath respective side frames and hinged to the vehicle. Each mower housing includes a height adjusting trailer wheel on one end thereof and an antiscalping roller on the opposite end. Each mower housing includes a pair of blades positioned such that all four blades of the device cut a width approximately as wide as the device and, in particular, between the two mower housings.

The drawings constitute a part of this specification and include exemplary embodiments of the present invention and illustrate various objects and features thereof.

### Brief Description of the Drawings

Fig. 1 is a perspective view of a slope mower embodying the present invention.

Fig. 2 is an enlarged rear elevational view of the slope mower.

Fig. 3 is an enlarged and fragmentary bottom plan view of the slope mower, showing one mower housing.

Fig. 4 is an enlarged and fragmentary top plan view of the slope mower, showing one mower housing.

Fig. 5 is an enlarged and fragmentary side elevational view of the slope mower, showing one mower housing.

Fig. 6 is an enlarged and fragmentry cross-sectional view of the slope mower, taken along line 6-6 of Fig. 19.

Fig. 7 is a fragmentary bottom plan view of the slope mower, showing mower housings thereof.

Fig. 8 is a fragmentary and enlarged front elevational view of the slope mower, showing one mower housing and side frame thereof adapting to terrain.

Fig. 9 is a rear elevational view of the slope mower on a reduced scale, showing the mower housings and vehicle frame thereof adapting to terrain.

Fig. 10 is an enlarged and fragmentary perspective view of the slope mower, showing drive and pivot mechanisms associated with a mower housing thereof.

Fig. 11 is an enlarged and fragmentary perspective view of the slope mower showing height adjustment associated with one of the mower housings.

### Detailed Description of the Invention

As required, detailed embodiments of the present invention are disclosed herein; however, it is to be understood that the disclosed embodiments are merely exemplary of the invention which may be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

Referring in more detail to the drawings:

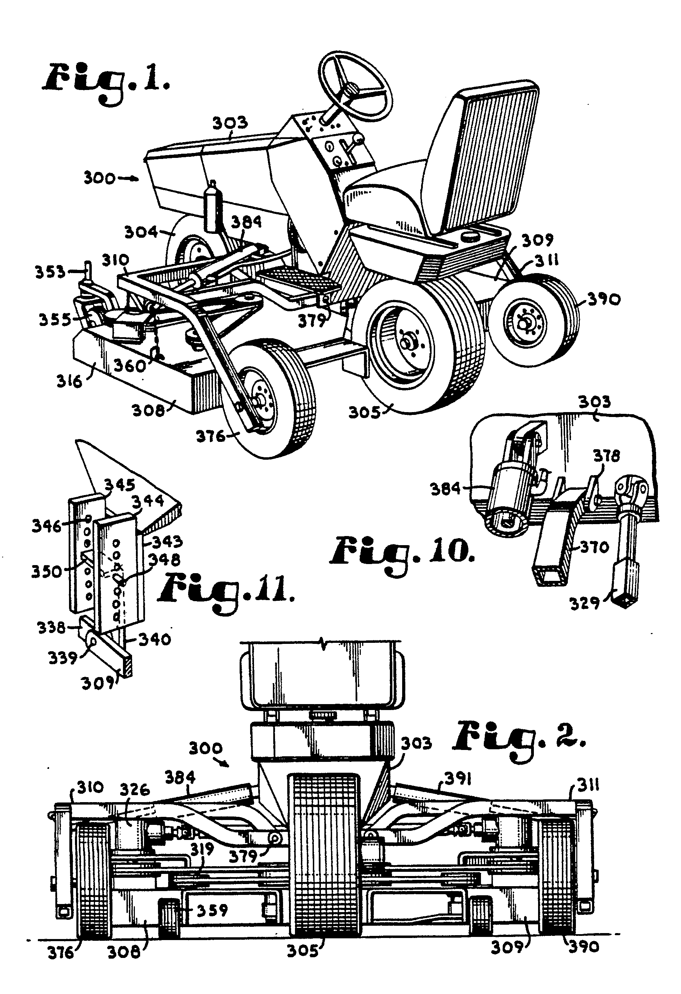

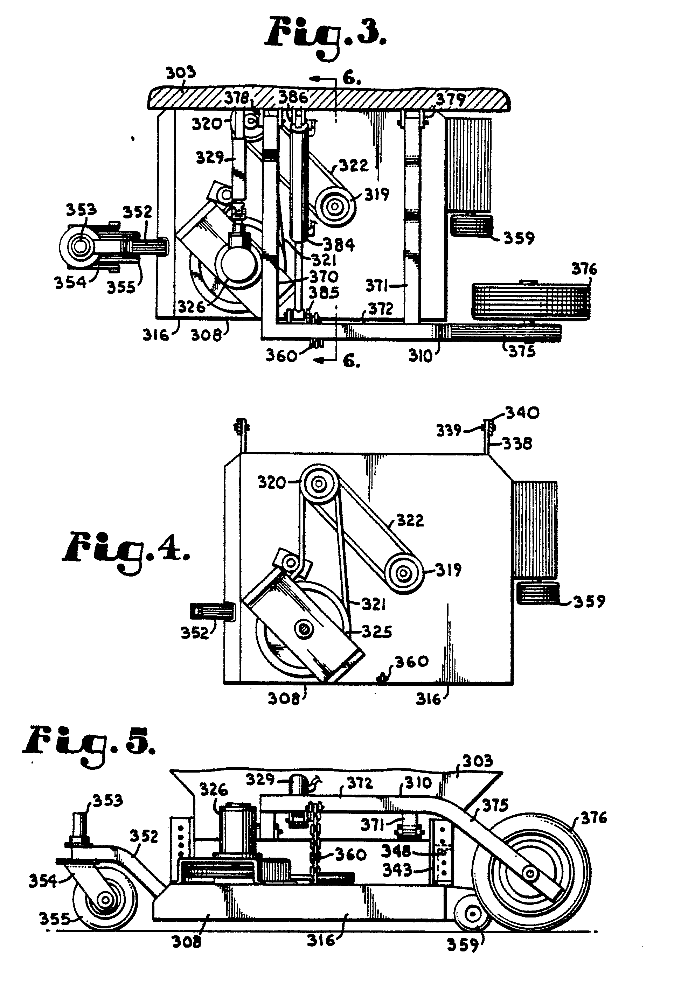

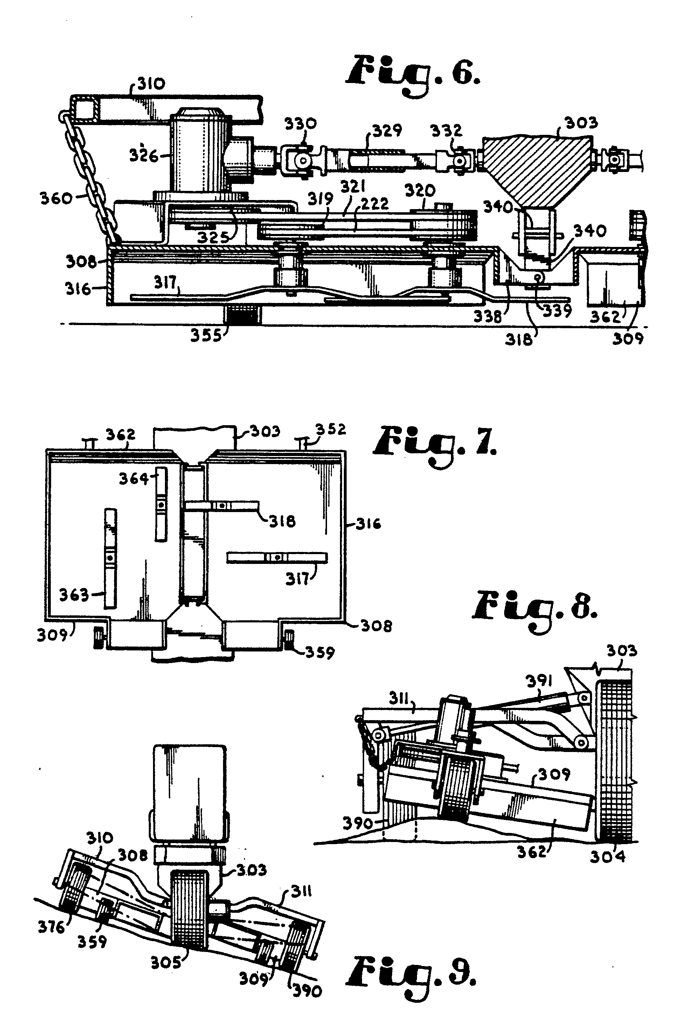

Figs. 1 through 11 illustrate an embodiment of a slope mower according to the present invention, generally designated by the numeral 300.

The slope mower 300 includes a main vehicle frame or body 303, a front wheel 304, a rear wheel 305, a first mower 308, a second mower 309, a first side support frame 310 and a second side support frame 311.

The vehicle body 303 incorporates therein a prime mover or engine.

The first mower 308 includes a housing 316 having a first blade 317 and a second blade 318 rotatably mounted therein. The first and second blades 317 and 318 are driven by pulleys 319 and 320 respectively which are in turn driven by drive belts 321 and 322. In particular the drive belt 321 drives the pulley 320 and the drive belt 322 is driven by the pulley 320 to drive the pulley 319.

The drive belt 321 is in turn driven by a pulley 325 which is driven by a gear reduction device 326 mounted upon the housing 316. The gear reduction device is in turn connected by a drive shaft 329 and by a pair of universal joints 330 and 331 to the prime mover.

The housing 316 is pivotally mounted, on the side thereof closest to the mower body 303, so as to generally rotate about an axis which is parallel to an axis passing through the wheels 304 and 305 and closely spaced relative thereto. In particular the housing 316 is connected by a strut 338 to an axle 339 in turn connected to a height adjustment plate 340. The plate 340 is L-shaped and extends upwardly from the connection thereof with the strut 338. An adjustment structure 343 (see Fig. 11) is fixedly attached to and depends from the bottom of the vehicle body 303 intermediately therealong.

The adjustment structure 343 includes a pair of spaced and vertically aligned plates 344 and 345 each having a plurality of equally spaced and horizontally aligned apertures 346 passing therethrough. A bar 348 of approximately the same diameter as the apertures 346 extends through a pair of the horizontally aligned apertures 346 and can be selectively adjusted and secured in position by an operator along the vertically positioned apertures 346.

An upper section 350 of the adjustment plate 340 extends over the bar 348. In this manner the height of the inner side of the mower housing 316 can be adjusted relative to the height of the mower vehicle body 303. Extending forwardly of the mower housing 316 is a strut 352 having mounted therein a vertical axle 353 supporting a clevis 354 and a freely turning wheel 355. The height of the strut 352 and, consequently, the mower housing 316 at that location is adjustable relative to the wheel 355 by placement of washers and the like between the strut 352 and clevis 354, so as to adjust the outer mowing height of the first mower 8. An antiscalping wheel or roller 359 is pivotally attached to the mower housing 316 near the outer end thereof opposite the wheel 355. A chain 360 loosely supports the housing 316 beneath the first side support frame 310.

The second mower 9 includes a housing 362 covering a pair of internally and pivotally mounted cutting blades 363 and 364. The housing 362 is generally a mirror image of the housing 316, except that the blades 363 and 364 are aligned to rotate at angles of ninety degrees to the blades 317 and 318, as seen in Fig. 23.

The first side support frame 310 comprises two radial members 370 and 371 joined near outer ends thereof with a axially aligned member 372. The axial aligned member has a downwardly extending trailing section 375 upon which is rotatably mounted a wheel 376. The wheel 376 has an axis of rotation which is generally parallel to the axis of rotation of the rear wheel 305. The inner ends of the radial members 370 and 371 are pivotally attached to the vehicle body 303 by pivot structures 378 and 379 respectively. The support frame 310 is also connected to the mower vehicle body 303 by a hydraulic ram 384 having a first pivotal connection 385 connecting the ram to the frame member 372 at one end thereof and a second pivotal connection 386 at an opposite end thereof connecting the ram 384 to the vehicle body 303. The ram 304 is operably connected to the hydraulic system of the mower 301 to maintain a downward pressure on the frame 310 as the mower 301 traverses various terrain.

The second side support frame 311 is quite similar to but a mirror image of the first side support frame 310. In particular the second side support frame 311 includes an outrigger wheel 390 pivotally mounted near the radially outward side of the frame 311 at a spaced location from the vehicle body 303 and spaced from the vehicle wheels 304 and 305. The frame 311 is also pivotally connected to the body frame along an axis of rotation which is parallel aligned to an axis passing through the wheels 304 and 305. A hydraulic ram 391 pivotally connected to the vehicle body 303 and to the outer side of the frame 311 operably biases the frame 311 downwardly under control of an attitude adjustment system associated with the slope mower 1 which controls the hydraulic pressure to the ram 391 in a manner similar to the control of the ram 384.

In operation of the slope mower 301, the attitude of the relatively thin vehicle body 303 mounted on spaced front and rear wheels 304 and 305 is maintained in a general vertical orientation by operation of the hydraulic system on the side frames 310 and 311. In particular, as the vehicle passes over various terrain the wheels 390 and 376 are operably biased against the ground by the rams 391 and 384 respectively so as to maintain the vehicle body 303 in an upright orientation. Operation of the 301 mower over different types of terrain can be seen in Figs. 2 and 9.

The first and second mowers 308 and 309 are generally independently mounted relative to the support frames 310 and 311. This allows the mowers 308 and 309 to be constructed of lighter material and to more easily follow the contour of the ground. This can be seen in Fig. 8. In particular, the second mower 309 is able to rotate upwardly so as to ride over a slight rise in the contour of the land beneath the mower 309, while the support frame wheel 376 follows a different contour. However, the mower 308 is connected by the chain 360 to the first frame 310 so that the operator can raise the mower 308 by override of the hydraulic system working through the ram 384, to raise the first support frame 310 into a raised and non-ground following orientation.

It is to be understood that while certain forms of the present invention have been illustrated and described herein, it is not to be limited to the specific forms or arrangement of parts described and shown.

## Claims

1. A mower vehicle for mowing slopes comprising:
(a) a mower vehicle main frame having a generally vertical orientation, when in operation;
(b) single front wheel means and single rear wheel means, each of said wheel means being connected to said main frame and generally aligned such that said frame is pivotal relative to the ground about a longitudinal line passing through the bottom of both said front and rear wheel means;
(c) a prime mover mounted on said main frame and connected to at least one of said front wheel means and rear wheel means for movement of said mower vehicle across the ground;
(d) a side frame pivotally connected to said main frame and swingable about an axis extending longitudinally of said main frame; said side frame extending laterally from said longitudinal axis and having a ground engageable outrigger wheel laterally spaced from said main frame;
(e) a mower housing extending outwardly from said main frame and including cutting means mounted therein; said mower housing being partially movable independent of said side frame; and
(f) pivoting means for pivoting said side frame about said longitudinal axis in automatic response to a change in terrain thereby allowing said side frame to follow the terrain while said main frame pivots about the terrain on said front and rear wheel means and remains in the vertical orientation thereof.

2. The vehicle according to Claim 1 wherein:
(a) said side frame is a first side frame and said mowing housing is first mowing housing; and including:
(b) a second side frame being pivotally connected to said main frame on an opposite side of said main frame relative to said first side frame; said second side frame being swingable about an axis extending longitudinally of said main frame; said second side frame extending laterally from said longitudinal axis and having an associated ground engageable outrigger wheel laterally spaced from said main frame; and
(c) said second mower housing including cutting means and being mounted generally beneath said second side frame.

3. The vehicle according to Claim 1 including:
(a) level control means cooperating with said pivoting means such that said pivoting means bias against both said main frame and said side frame so as to maintain said main frame in the vertical orientation thereof.

4. A mower vehicle for mowing slopes comprising:
(a) a mower vehicle main frame having a generally vertical upright orientation when in operation and an operator seat adapted to receive an operator;
(b) single front ground engaging wheel means and single rear ground engaging wheel means, each of said wheel means being connected to said main frame and generally aligned such that said main frame and wheel means are pivotal relative to the ground on a longitudinal axis passing through a lower portion of both of said front and rear ground engaging wheel means when said wheel means are engaging the ground;
(c) a prime mover mounted on said main frame and connected to at least one of said front wheel means and rear wheel means for movement of said mower vehicle across the ground;
(d) a side frame pivotally connected to said main frame and swingable about an axis extending longitudinally of said main frame; said side frame extending laterally from said longitudinal axis and having a ground engageable outrigger wheel laterally spaced from said main frame;
(e) a mower housing including cutting means mounted generally beneath said side frame and pivotal on one side thereof relative to said main frame; said mower housing including mobile support means spaced laterally from said main frame; said mower housing pivotally floating independent of said side frame to allow independent movement of said mower housing to follow ground terrain;
(f) pivoting means operationally pivoting said side frame about said longitudinal axis in response to a change in the angle of the terrain relative to horizontal such that said side frame follows the terrain and said main frame remains upright; and
(g) level control means cooperating with said pivoting means to maintain said main frame in the vertical orientation thereof whereby when an operator is positioned in said operator seat, the operator is maintained in an upright attitude even when said vehicle passes over non-horizontal terrain.

5. The vehicle according to Claim 4 wherein:
(a) said side frame is a first side frame and said mower housing is first mower housing; and including:
(b) a second side frame pivotally connected to said frame on an opposite side of said main frame relative to said first side frame; said second side frame being swingable about an axis extending longitudinally of said main frame; said second side frame extending laterally from said longitudinal axis and having an associated ground engageable outrigger wheel laterally spaced from said main frame; and

(c) said second mower housing including cutting means mounted in said second mower housing; said second mower housing being pivotal on one side thereof with respect to said main frame and having mobile support means on the opposite side thereof.

6. The vehicle according to Claim 4 wherein:

(a) said level control means includes automatic adjustment to maintain said main frame in the upright orientation thereof by biasing said pivoting means against said main frame and said blade housing and by controlling the degree of such biasing; and

(b) a manual override to allow an operator to control the attitude of said main frame.

7. The vehicle according to Claim 4 including:

(a) adjustment means to allow variance in the relative height of said mower housing relative to said main frame.

**Fig.1.**

303
300 →
304
384
353
310
355
316
360
308
376
379
309
311
390
305

**Fig.10.**

303
384
378
370
329

**Fig.11.**

345
344
346
343
350
348
338
340
339
309

**Fig.2.**

300
303
310
326
384
391
311
319
379
359
376
308
305
309
390

# Fig.3.

# Fig.4.

# Fig.5.

*Fig. 6.*

*Fig. 7.*

*Fig. 8.*

*Fig. 9.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 707 971 (FORPAHL) <br> * In its entirely * <br> --- | 1-7 | A 01 D 75/30 <br> A 01 D 75/28 <br> A 01 D 34/86 |
| A | FR-A-2 089 224 (DEERE) <br> * Page 2, lines 8-11; page 5, lines 6-38; page 6, lines 16-34 * <br> --- | 1,2,4,5 ,7 | |
| A | US-A-4 325 211 (WITT) <br> * In its entirely * <br> --- | 1,4 | |
| A | US-A-2 023 392 (NEILSEN) <br> --- | | |
| A | US-A-3 154 903 (SMITH) <br> --- | | |
| A | US-A-4 041 678 (CHANEY) <br> --- | | |
| A | US-A-3 418 790 (WHITFIELD) <br> ----- | | |

TECHNICAL FIELDS
SEARCHED (Int. Cl.5)

A 01 D

The present search report has been drawn up for all claims

| Place of search | Date of completion of the search | Examiner |
|---|---|---|
| THE HAGUE | 15-02-1990 | CROWE D. |